Europäisches Patentamt

European Patent Office

Office européen des brevets

(11) Publication number: **0 415 444 A2**

# EUROPEAN PATENT APPLICATION

(21) Application number: 90116762.7

(22) Date of filing: 31.08.90

(51) Int. Cl.⁵: **G02F 1/09**

(30) Priority: 31.08.89 JP 225234/89

(43) Date of publication of application:
**06.03.91 Bulletin 91/10**

(84) Designated Contracting States:
**DE GB IT**

(71) Applicant: SEIKO INSTRUMENTS INC.
31-1, Kameido 6-chome Koto-ku
Tokyo 136(JP)

Applicant: NIPPON TELEGRAPH AND
TELEPHONE CORPORATION
1-6 Uchisaiwaicho 1-chome Chiyoda-ku
Tokyo(JP)

(72) Inventor: Nishigaya, Kazushi
c/o Seiko Instruments Inc., 31-1, Kameido
6-chome
Koto-ku, Tokyo(JP)
Inventor: Toba, Hiromu, c/o Nippon Telegraph
&
Telephone Corporation, 1-6, Uchisaiwaicho
1-chome
Chiyoda-ku, Tokyo(JP)
Inventor: Iwakiri, Toyokazu
c/o Seiko Instruments Inc., 31-1, Kameido
6-chome
Koto-ku, Tokyo(JP)

(74) Representative: Fleuchaus, Leo, Dipl.-Ing. et al
Melchiorstrasse 42
W-8000 München 71(DE)

(54) Optical isolator.

(57) An optical isolator has a faraday rotator driven
by magnets. An orientation of magnetization of the
magnets is approximately vertical to the optical axis
of the optical isolator.

FIG. 1

## OPTICAL ISOLATOR

Background of the Invention

Field of the Invention

The present invention relates to an optical isolator with a faraday rotator generally used for optical fiber communication, optical measurements, and optical disc memories.

Description of the Prior Art

Optical isolators are classified roughly into a single unit type (an isolation more than approx. 25dB) and a double unit type (an isolation more than approx. 50dB.) They are used properly in each system depending on the quantity of isolation of return signal required by each system.

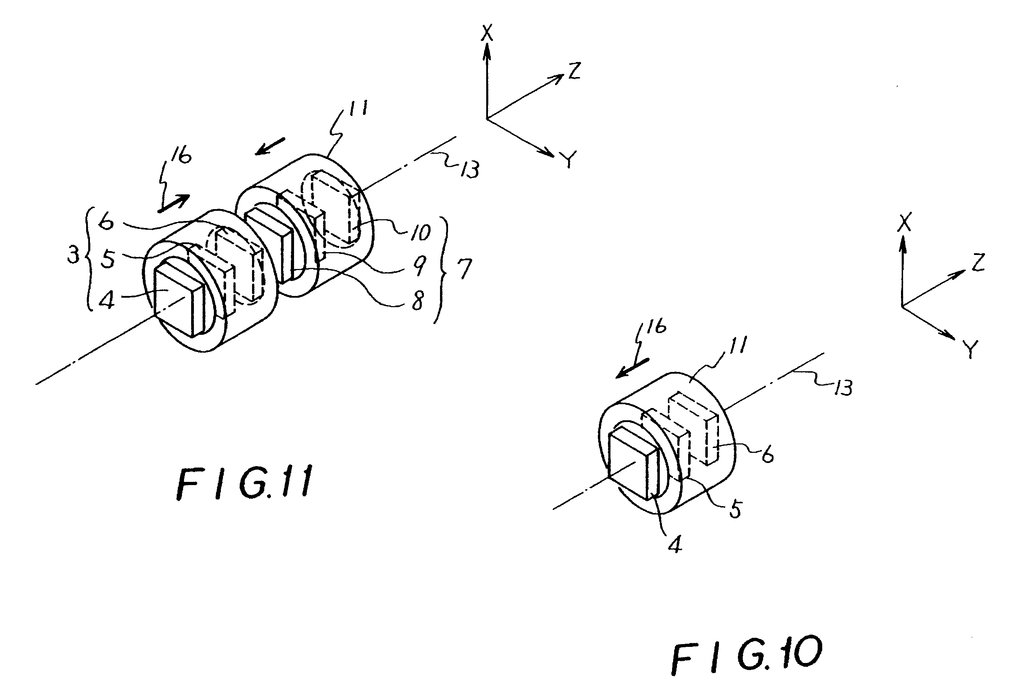

As described in the Fig.10, a conventional single unit type isolator is provided with the cylindrically shaped magnet 11 which is magnetized parallel to an optical axis and accomodates the faraday rotor 5.

As described in the Fig.11, a conventional double unit type isolator is provided with the two cylindrically shaped magnets 11 which are magnetized parallel to an optical axis and accomodate the faraday rotators 5 and 9.

The faraday rotating directions of the first isolator unit 3 and the second isolator unit 7 can be designed conversely in order that a direction of polarization of incident beam may correspond with that of output beam. Thus, the orientations of magnetic field of two magnets are parallel to the axis and converse.

As described above, since in the conventional optical isolator the magnets are magnetized parallel to the optical axis, the diameter and length of magnets turns out large and long, which causes the body of the optical isolator to be large-sized to meet the required intensity and uniformity of magnetic field by the faraday rotator.

Further, the double unit type isolator requires the design for the magnetic circuit with an attention on interference caused between two magnetic fields owing to setting up two magnets. In addition, it is difficult to achieve the above conditions in an ultra miniaturized double unit type isolator having several mm of optical path length.

Summary of the Invention

The object of the present invention is to shorten and miniaturize the body of the optical isolator along the optical axis and meet the required intensity and uniformity of the magnetic field by the faraday rotator. An optical isolator according to the present invention has magnets with those orientations of magnetization approximately vertical to the optical axis of the optical isolator, so that the miniaturized optical isolator can be obtained and enables to mount and package it on a printing circuit board easily.

Brief Description of the Drawings

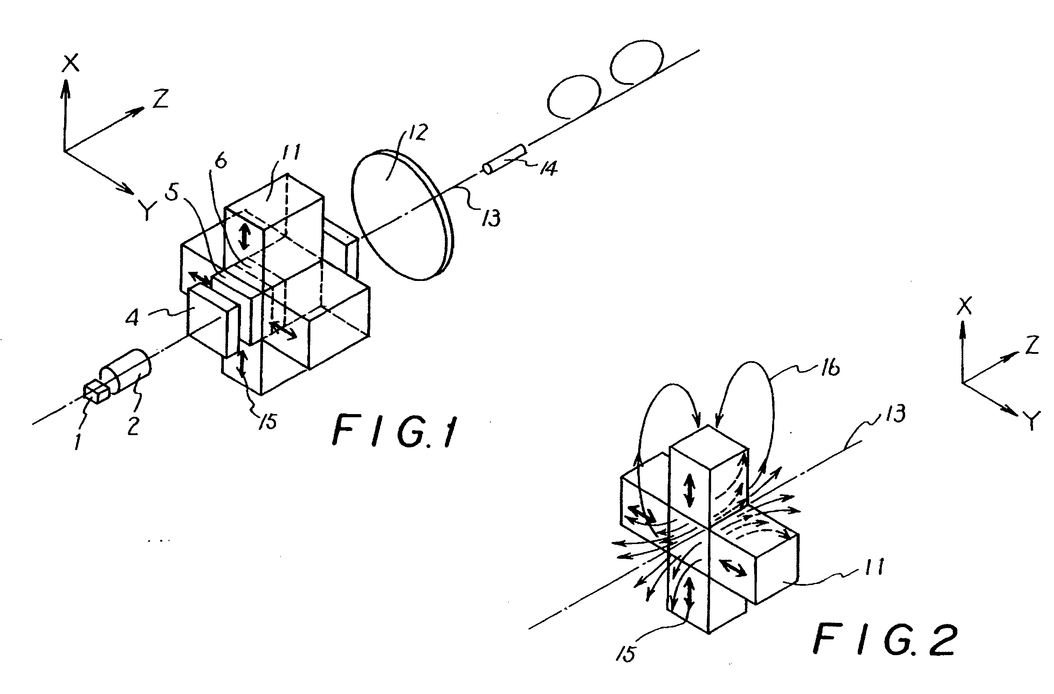

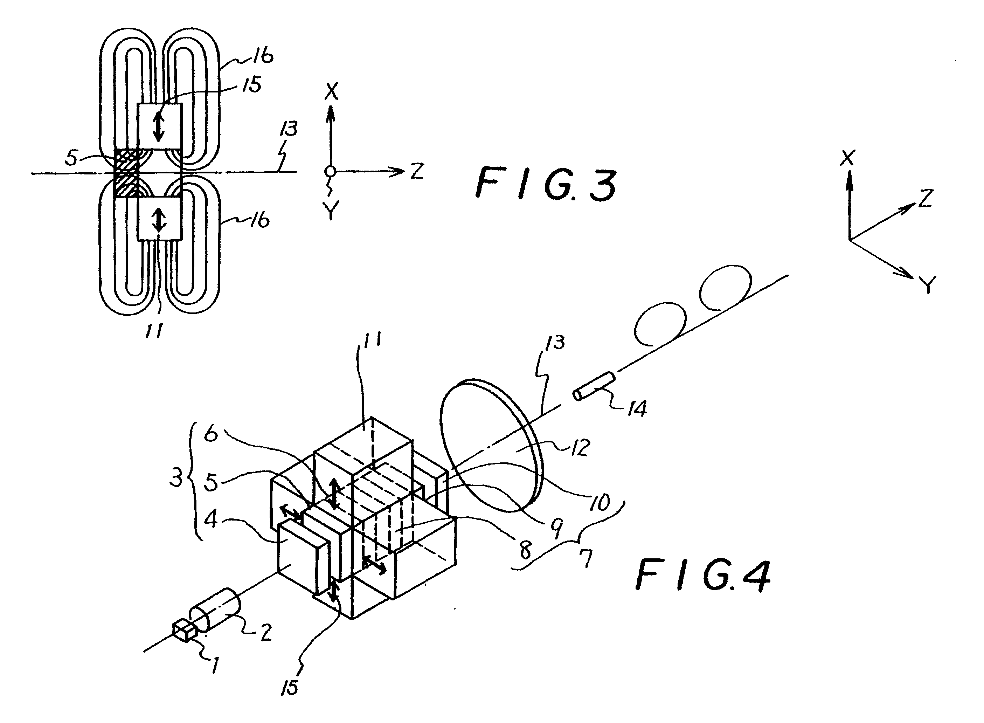

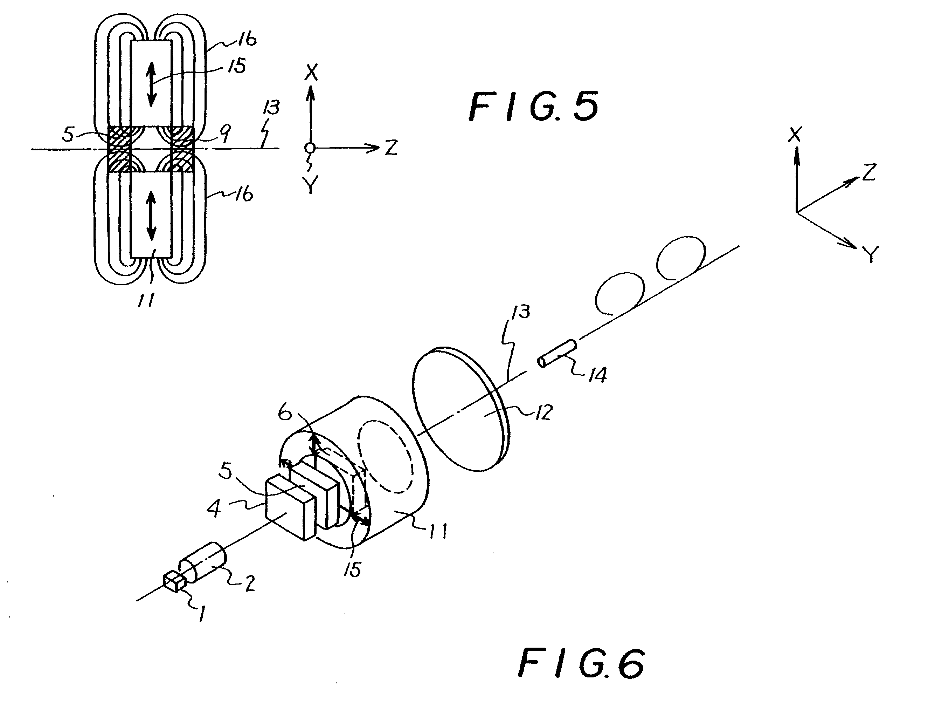

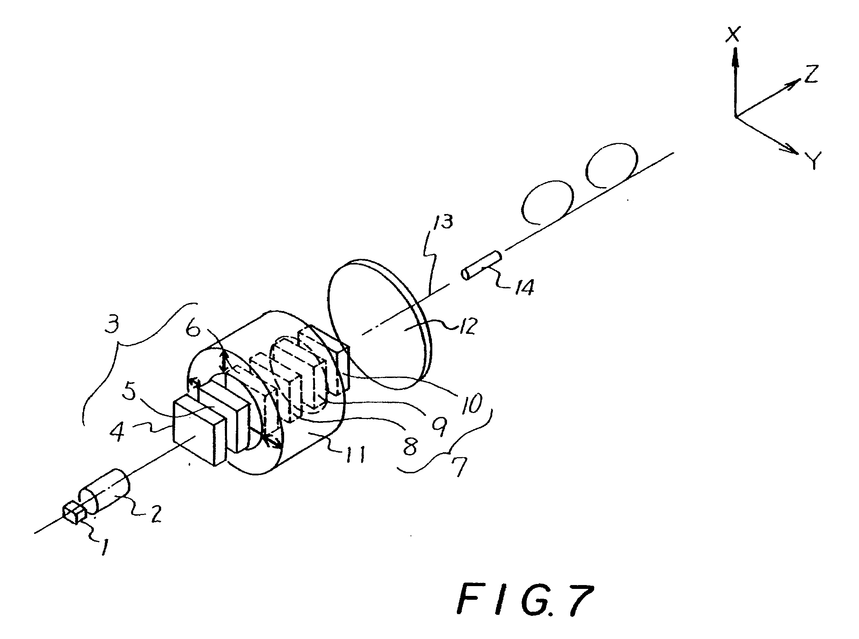

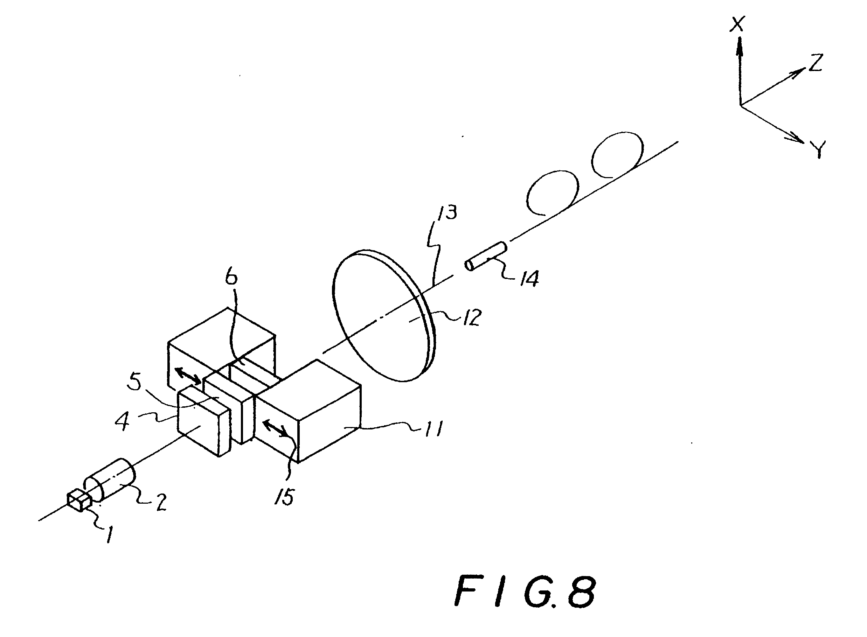

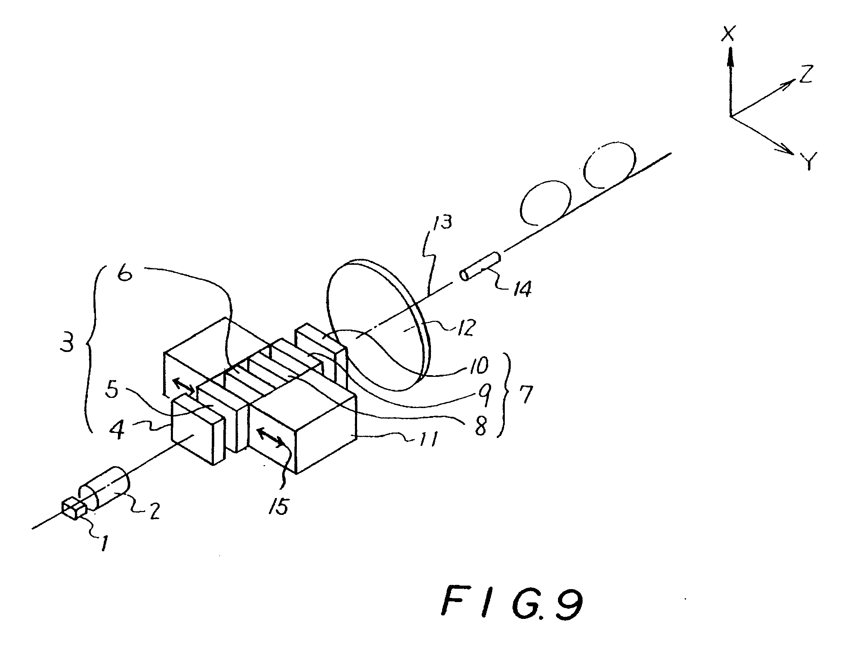

Fig.1 is a schematic representation of a optical system using a single unit type optical isolator in the first embodiment of the present invention. Fig.2 is a schematic representation of magnetic circuit in the first embodiment. Fig.3 is the cross sectional view of Fig.2. Fig.4 is a schematic representation of an optical system using a double unit type optical isolator in the second embodiment of the present invention. Fig.5 is a cross sectional view of the magnetic circuit in the second embodiment. Fig.6 is a schematic representation of an optical system using a single unit type optical isolator in the third embodiment of the present invention. Fig.7 is a schematic representation of an optical system using a double unit type optical isolator in the fourth embodiment of the present invention. Fig.8 is a schematic representation of an optical system using a single unit type optical isolator in the fifth embodiment of the present invention. Fig.9 is a schematic representation of an optical system using a double unit type isolator in the sixth embodiment of the present invention. Fig.10 is a schematic representation of a single unit isolator in the prior art. Fig.11 is a schematic representation of a double unit type isolator in the prior art.

Detailed Description of the Preferred Embodiment

An embodiment of the present invention will be described with reference to drawings. In the first embodiment of the present invention, the Fig.1 is the schematic representation of the principle of the optical system using a single unit type optical isolator. The optical isolator in this embodiment is provided with the polarizer 4, the faraday rotator 5, the analyzer 6, and the magnets 11 which drive the faraday rotator.

X, Y, and Z axes are assumed to show the directions of the arrows illustrated in Figs. for the explanation sake. The Z axis is parallel to the optical axis 13 of the optical isolator, the X and Y axes are directed at a right angle to the optical axis 13 in each optical isolator, and the X axis is directed at a right angle to the Y axis. The Y axis is directed at a right angle to the paper surface in the Figs.3 and 5. The polarizer 4, the faraday rotator 5, and the analyzer 6 are placed on the optical axis 13 in the optical isolator. The polarizer 4 and the analyzer 6 employ a polarized beam-splitter, Wollaston prisms, Glan-Thompson prisms, and a birefringent polarized plate. The magnets 11 totalled four are set up on the upper, lower, left and right sides of the optical axis 13. The faraday rotator 5 may either attach to or detach from the magnets 11, if the magnetic field of -Z direction can be applied to the position parallel to the optical axis 13 in the optical isolator.

The Fig.2 is the schematic representation of the magnetic circuit in the first embodiment. The Fig.3 is its cross sectional view. The orientation of magnetization 15 of the magnets 11 is approximately vertical to the optical axis 13 in the optical isolator. The magnets 11 are, for example, polarized to the north pole which direct to the optical axis 13 in the optical isolator. Thus, the magnetic field of -Z direction is applied parallel to the optical axis 13 in the optical isolator for the faraday rotator 5.

Next, the function of the embodiment will be described. The Fig.1 shows that the output beam of the laser diode 1 is, for example, comprised of linear polarized beam of Y direction, which is changed into the parallel beam with GRIN lens 2, and incident upon the polarizer 4. The polarization of the polarizer 4 is the same as that of the laser diode 1, so that the parallel beam accordingly is incident on the faraday rotator 5 without loss. Since the faraday rotator 5 has a negative coefficient of rotation,the polarized plane of the incident beams rotates 45 degree clockwisely by the faraday rotation effect. The polarization of the analyzer 6 rotates 45 degree clockwisely to the polarization of the laser diode 1, accordingly, the beams pass through the optical isolator without loss. The lens 12 focusses output beam on the optical fiber 14. The overlapped explanation with this embodiment is omitted from the following embodiment.

The Fig.4 is the schematic representation of the optical system using the double unit type optical isolator of the second embodiment in the present invention. The optical isolator of the second embodiment is provided with the first stage optical isolator 3, the second stage optical isolator 7, and the magnets 11. The said first stage optical isolator 3 is comprised of the polarizer 4, the faraday rotator 5, and the analyzer 6. The said second stage optical isolator 7 is comprised of the polarizer 8, the faraday rotator 9, and the analyzer 10. The said magnets 11 are set up on the upper, lower, right and left sides of the optical axis 13 and between the faraday rotators 5 and 9 in the optical axis direction. The said faraday rotators 5 and 9 can be either attached or detached to magnets 11, if the magnet field of -Z direction for the faraday rotator 5 and that of +Z direction for the faraday rotator 9 are applied parallel to the optical axis 13.

The Fig.5 shows a schematic cross sectional view of the magnetic circuit in the second embodiment. The orientations of magnetization 15 of the magnets 11 are approximately vertical to the optical axis 13 in the optical isolator. The magnetic field of -Z direction for the faraday rotator 5 and that of +Z direction for the faraday rotator 9 are applied parallel to the optical axis. The operation of the second embodiment is illustrated as follows: The output beam emitted from the laser diode 1 passes through the single unit type isolator 3 in the same manner as that of the first embodiment. The direction of polarization of the polarizer 8 is the same as that of the analyzer 6 which enable the beam passing through the single unit type isolator 3 to enter the faraday rotator 9 without loss. The magnetic field applied to the faraday rotator 9 takes reverse direction from the direction of the magnetic field applied to the farday rotator 5. The faraday rotator 9 shows the same characteristics of the faraday rotator 5 and has a negative coefficient of rotation. Thus, the plane of polarization of incident beam rotates 45 degree counterclockwisely by the faraday rotation effect. The plane of polarization of the analyzer 10 is placed to the same direction of that of the analyzer 4, which conform to the plane of polarization of the optical beam passed through the faraday rotator 9, so that the optical beam passes through the double unit type optical isolator 7 without loss. The lens 12 focusses output beam on the optical fiber 14.

The Figs.6 and 7 are the schematic representations of the optical system using the third embodiment (a single unit type) and the fourth embodiment (a double unit type) in the present invention respectively. Each magnet 11 is a cylindrical shape whose central axis is set up to coincident with the optical axis 13 of the optical isolator in these embodiments. The orientations of magnetic field 15 of the magnets 11 are approximately vertical to the optical axis 13. The optical isolator becomes more miniaturized by fabricating the magnets to one body.

The Figs.8 and 9 are the schematic representations of the optical system using the fifth embodiment (a single unit type) and the sixth embodiment (a double unit type) in the present invention respectively. The said embodiments illustrate two of the magnets 11 set up to the Y direction. The orientations of magnetic field 15 of the magnets 11 are approximately vertical to the optical axis 13. The optical isolators can be miniaturized to the X direction by using only these two magnets. The laser diode modules with these built-in optical isolators according to these embodiments make packaging and mounting them on printing boards easily.

As described above, the present invention is advantageous in capable of shortening and miniaturizing the body of the optical isolator along the optical axis and meeting the required intensity and uniformity of tahe magnetic field by the faraday rotator, since the orientations of magnetization of magnets are brought approximately vertical to the optical axis in the optical isolator. Further, since the double unit type isolator according to the present invention has no interference caused between two magnetic fields owing to setting up two magnets, it is easy to design a magnetic circuit. The ultra miniaturized double unit type isolator according to the present invention easily structure the magnetic circuit which is difficult to be structured in a conventional isolator.

## Claims

1. An optical isolator having a faraday rotator driven by magnets, characterized in that an orientation of magnetization of said magnets is approximately vertical to the optical axis of the optical isolator.

FIG.1

FIG.2

EP 0 415 444 A2

F I G.3

F I G.4

EP 0 415 444 A2

**FIG.5**

**FIG.6**

F I G. 7

EP 0 415 444 A2

F I G. 8

# FIG.9

EP 0 415 444 A2

F I G.11

F I G.10

EP 0 415 444 A2